# EUROPEAN PATENT SPECIFICATION

(11) **EP 1 362 193 B1**
(45) Date of publication and mention of the grant of the patent: **29.12.2010**
(21) Application number: 01914421.1
(22) Date of filing: 21.02.2001
(51) Int. Cl.: F16D 1/00, F16B 12/24

(54) **DOWEL AND METHOD OF USING SAME**
DÜBEL UND VERWENDUNGSVERFAHREN DAFÜR
CHEVILLE ET PROCEDE D'UTILISATION

(43) Date of publication of application: 19.11.2003
(73) Proprietor: Miller, Michael R., Winnetka, IL 60093 (US)
(72) Inventor: Miller, Michael R., Winnetka, IL 60093 (US)
(74) Representative: Lorenz, Werner
(86) International application number: PCT/US2001/005525
(87) International publication number: WO 2002/068836

(56) References cited:
- BE-A- 457 703
- DE-A- 2 043 682
- FR-A- 1 064 660
- GB-A- 221 280
- US-A- 3 527 486
- US-A- 3 883 258
- US-A- 4 536 044

## Description

### FIELD OF THE INVENTION

The present invention relates to dowels, and more particularly to dowels that provide for decreasing diameters over the length of the dowel and provide for enhanced connection of adjoining components.

### BACKGROUND OF THE INVENTION

Dowels of various types are known in the art. Such devices are typically used in the furniture industry for joining the various components of a furniture assembly. Dowels are used in other industries as well, for example, dowels may be used to join landscaping timber. During construction, a dowel is driven into an opening, such as a circular shaped bore, of one of the furniture components that comprise the assembly. The second furniture component to be connected to the first furniture component is also provided with an opening for the dowel. The opening in the second furniture component is aligned with the opening in the first furniture component. The dowel that is mounted to the first component is then inserted and driven into the opening in the second component. Pressure may be applied to the two components when the dowel is being driven into the opening in the second component. Since the dowel's diameter is greater in size then the diameters of the openings, the dowel is held in the openings by the frictional forces exerted on the dowel's outer side walls by the inner side walls of the openings in the two components.

FR 1064660 A describes a dowel for connecting elements of furniture, for example a chair. This dowel comprises two tapered sections with the middle of the dowel having the biggest diameter and the two ends having the smallest diameter.

A further dowel is described in DE 20 43 682 A 1. This dowel has different sections which consist of a plurality of conical projections in order to increase the resistance against extraction of the dowel after its mounting.

US-A-3 527 486 describes a dowel sleeve having an outer end face formed with pointed marking extensions which are adapted to be impressed into a first part when said sleeve is in position in a second part.

In GB-A-221,280 a dowel having a cylindrical and a conical section is described. The conical section has circumferential grooves.

BE 457 703 A describes an assembly system according to the preamble of claim 1. This assembly is in particular useful for furniture and especially for metallic beds of the type that include two plane surfaces in contact with one another. One of the plane surfaces is fitted with a head whose edge is located within a distance of the plane surface, smaller than the thickness of the other plane surface such that itself possesses a comfort hole to receive the edged head.

However, existing dowels known in the art have some inherent disadvantages. One of the disadvantages with existing dowels is that, when inserting the dowel in the openings of the adjoining components, a high pressure must be applied to overcome the frictional force which acts on the contact surface between the outer wall surface of the dowel and the inner wall surface of the opening and acts opposite to the dowel's insertion direction. As a result, when the dowel is inserted into the openings, an undesirable deformation of the opening's inner wall surface may occur. This deformation may impair the connection of the dowel with the component. Further, if the dowel experiences extreme stress the dowel may be damaged and may break. Safety issues are also a concern, if the stresses on the dowel are such that the dowel splits into more than one piece, the user may be injured by material splinters.

The present invention overcomes these and other problems inherent in existing dowels. The present invention provides a dowel that has multiple sections that decrease in diameter over the longitudinal axial length of the dowel. The decreasing diameters of the dowel sections minimize the frictional forces and resultant stresses exerted on the dowel during insertion of the dowel into the component openings. Thus, the user experiences easier insertion of the dowel into the openings of the components. Also, the dowel is less prone to breakage and user safety is enhanced. Further, while the dowel provides a secure, locked component fit, the components experience considerably less deformation when the dowel is inserted into the respective openings. Since component deformation is minimized, the components last longer and their appearance does not deteriorate.

### OBJECTS OF THE INVENTION

The principal object of the present invention is to provide an improved dowel having multiple sections that decrease in diameter over the longitudinal axial length of the dowel.

Another object of the present invention is to provide a novel dowel that is easier to insert into a component opening.

Still another object of the present invention is to provide a novel dowel that will provide for minimal deformation of the component that it is being inserted into.

Yet another object of the present invention is to provide a novel dowel that will provide for alignment of the components that the dowel is being inserted into.

A further object of the present invention is to provide a novel dowel that is safer to use.

A further object of the present invention is to provide a novel dowel which is simple in design and inexpensive to construct, and is durable and rugged in structure.

Still further objects and advantages will become apparent from a consideration of the ensuing description and drawings of the invention.

### SUMMARY OF THE INVENTION

These and other objects are achieved by an assembly according to claim 1 and a method according to claim 14.

### BRIEF DESCRIPTION OF THE DRAWINGS

FIG. 1 is a side view of one embodiment of the dowel of the present invention;
FIG. 2 is an end view of the dowel of FIG. 1 further including an insert;
FIG. 3 is a view of the dowel of FIG. 1 shown inserted into two openings and connecting two components together;
FIG. 4a is a side view of an alternate embodiment of the dowel of FIG. 1;
FIG. 4b is a side view of another alternate embodiment of the dowel of FIG. 1
FIG. 5 is a side view of one embodiment of a drill bit used to construct the openings in the components of FIG. 3;
FIG. 6 is a an end view of an alternate embodiment of the drill bit of FIG. 5; and
FIG. 7 is a side view of another alternate embodiment of the drill bit of FIG. 5.

### DETAILED DESCRIPTION

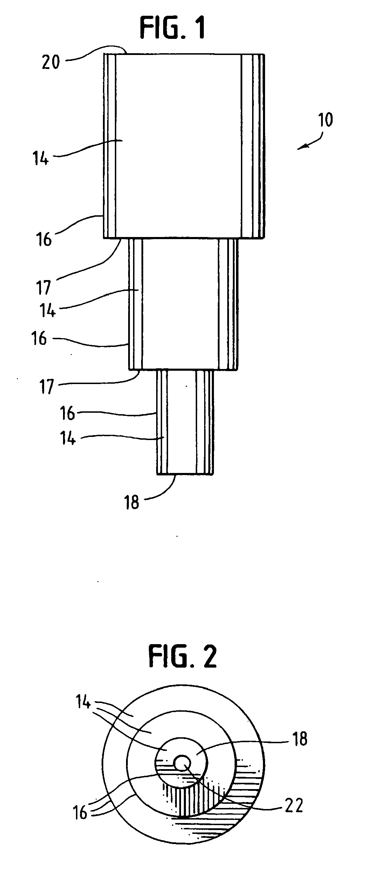

FIG. 1 is a side view of one embodiment of the dowel 10 constructed in accordance with the present invention. FIG. 1 shows one embodiment of the dowel 10 which is comprised of dowel sections 14 having side walls 16, step portions 17, a tip 18 and a base 20. Each dowel section 14 may have a substantially circular shaped cross section as taken perpendicular to the dowel section 14 longitudinal axis. As shown in FIG. 1, in one embodiment, dowel sections 14 may be substantially cylindrical in shape. Other embodiments of the dowel 10 may be constructed so that each dowel section 14 has a substantially square or triangular shaped cross section as taken perpendicular to the dowel section 14 longitudinal axis.

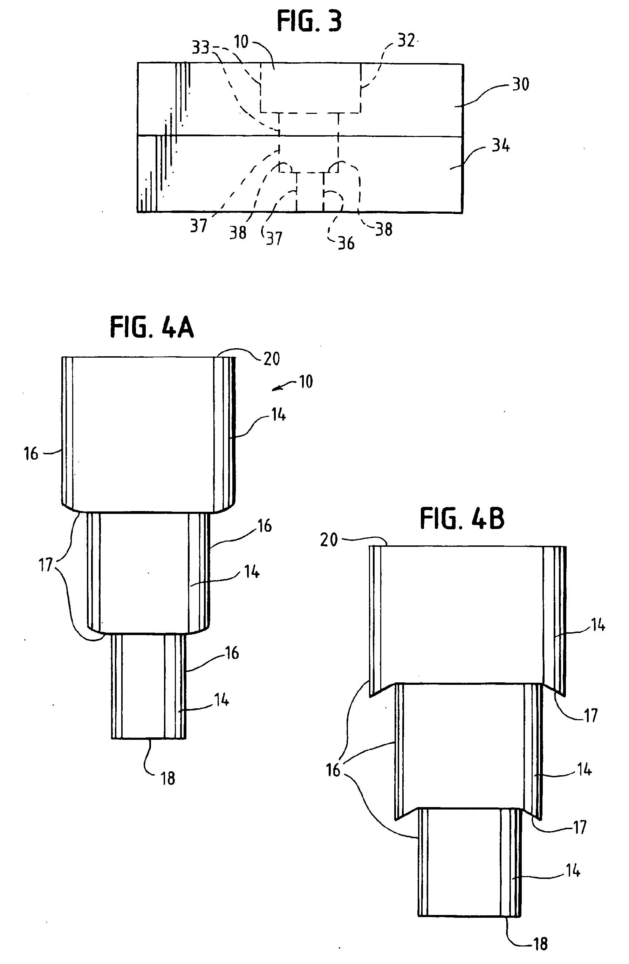

As shown in FIGS. 1 and 2, the three dowel sections 14 may extend from the base 20 and may be longitudinally axially aligned relative to the base 20 such that the dowel sections 14 are of descending diameter from the base 20 to the tip 18. Depending on the specific application, alternate embodiments of the dowel 10 may include two, four or more dowel sections 14. In one embodiment, the individual dowel sections 14 diameters may be sized in the range of 125mm to 6mm, 120mm to 4mm and 115 to 2.5mm respectively. In alternate embodiments, the individual dowel sections' 14 diameters may be any size and may be joined in any combination required for the particular application that dowel 10 is being used in. The length of each individual dowel section 14 may vary considerably depending on the application and the dimensions of components 30 and 34 (see FIG. 3) that will be joined. In one embodiment, the dowel section 14 having the smallest diameter has a length that is as long as or longer than the length of any of the other dowel sections 14.

The material selection for the dowel 10 may be dictated by such factors as, the dimensions of dowel sections 14, number of dowel sections 14 and components 30, 34 material type and/or dimensions. One embodiment of the dowel 10 may be constructed of wood such as, for example, mahogany, fir, birch, cedar or pine. In other embodiments, the dowel 10 may be constructed of plastic, metal or any other type of material that will provide for proper operation of the dowel 10. The dowel 10 may also be constructed of a combination of two or more materials. For example, as shown in FIG. 2, the dowel 10 may be constructed of wood and contain a metal post or insert 22 that runs longitudinally axially through the dowel 10 from base 20 to tip 18.

As shown in FIG. 1, step portion 17 may be formed by a ninety degree angle with respect to the dowel 10 longitudinal axis. However, depending on the application, the step portion 17 may be configured in a variety of different ways. In alternate embodiments of dowel 10, as shown in FIG. 4a, step portion 17 may be beveled or convex in shape. Beveled step portion 17 may provide dowel 10 with increased strength to prevent breakage if dowel 10 experiences unusually high tensile or shear forces in a particular application. Also, depending on the type of material dowel 10 is constructed of, the beveled step portion 17 may provide a more secure fit when in use and joining two components 30 and 34. In yet other embodiments, the step portion 17 may be recessed or concave in shape as shown in FIG. 4b. In still yet other embodiments, the step portion 17 may be rounded or any other shape that will provide for proper operation of dowel 10 when used in a particular application.

Dowel 10 may be constructed in a variety of different ways using a variety of different manufacturing tools and techniques. For example, dowel 10 may be constructed using a lathe, a tool that is well known in the art. Further, each individual dowel section 14 may be constructed separately and the individual sections 14 may be joined together to form the composite dowel 10. For example, in one embodiment, dowel sections 14 may be fixed together using any type of adhesive or the sections 14 may be fastened together using a fastener such as nails, metal posts or any other type of fastener that will provide for proper operation of dowel 10.

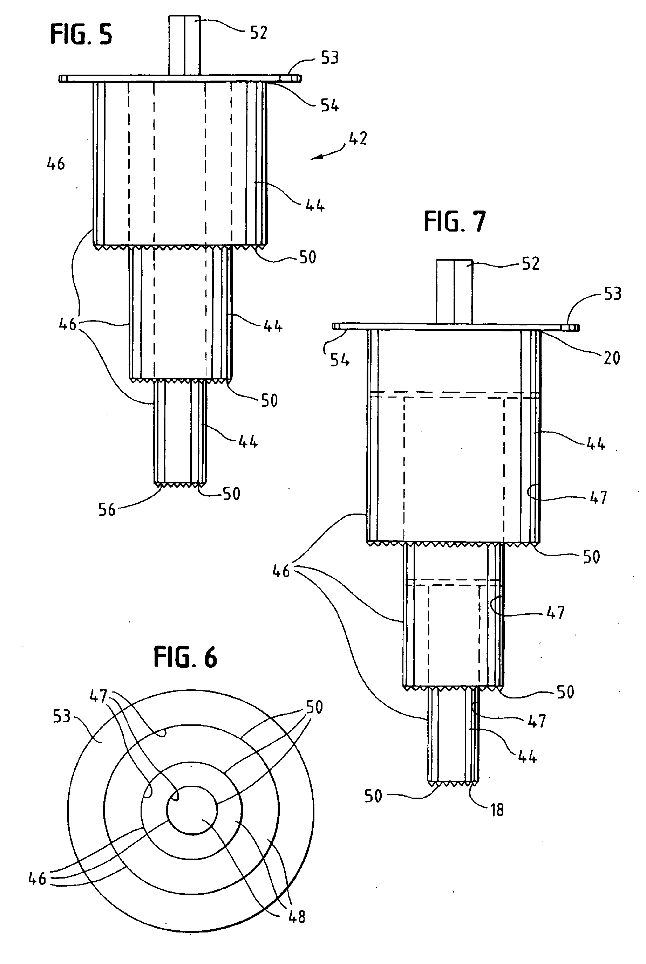

As shown in FIGS. 5 and 6, a drill bit 42, may be used to make the openings 32 and 36 in components 30 and 34, respectively. Drill bit 42 may comprise a plurality of drill sections 44, each having sidewalls 46, inner sidewalls 47, inner portions 48, teeth 50, a shaft 52, a stop plate 53, a base 54 and a tip 56. Each drill section 44 may have a substantially circular shaped cross-section as taken perpendicular to the drill section 44 longitudinal axis. FIG. 5 also shows that in one embodiment of the drill bit 42, three drill sections 44 may extend from the stop plate 53 and may be longitudinally axially aligned relative to stop plate 53 such that drill sections 44 are of descending diameter from the base 54 to the tip 56. Depending on the type and size of openings 32, 36 required, alternative embodiments of drill bit 42 may include two, four or more drill sections 44. In one embodiment, individual drill sections 44 diameters may be sized in the range of 126mm to 6.5mm, 121mm to 4.5mm and 116mm to 2.5mm. In still other embodiments, individual drill sections 44 diameters may be any size and may be joined in any combination required for the particular openings 32, 36 required. The length of each individual drill section 44 may vary considerably depending on the application and the dimensions of components 30 and 34 (see FIG. 3) that will be joined.

The material selection for drill bit 42 may be dictated by such factors as, for example, the dimensions of drill sections 44, number of drill sections 44 and components 30, 34 material type and/or dimensions. One embodiment of drill bit 42 may be constructed of metal such as, for example, hardened steel, stainless steel or titanium. In other embodiments, drill bit 42 may be constructed of any other type of material that will provide for proper operation of the drill bit 42. Drill bit 42 may also be constructed of a combination of two or more materials. For example, two of the drill sections 44 may be constructed of hardened steel and one drill section 42 may be constructed of titanium.

Teeth 50, as shown in FIG. 5, may be located on each drill section 44. In one embodiment, each tooth 50 may be positioned in close proximity to each adjacent tooth 50 so that there is no space between each tooth 50 and each adjacent tooth 50. In another embodiment, each tooth 50 may be spaced one tooth 50 width from each adjacent tooth 50. In yet another embodiment, each tooth 50 may be spaced from each adjacent tooth 50 any distance that is required for proper operation of the drill bit 42. Tooth 50 spacing, shape, size and material selection may be affected by, for example, components 30 and 34 material selection, length of drill bit 42, number of drill sections 44, and/or the rotation speed of the drill.

Drill bit 42 may be constructed in a variety of different ways using a variety of different manufacturing tools and techniques. Further, each individual drill section 44 may be constructed separately and the individual sections 44 may be joined together to form composite drill bit 42. For example, in one embodiment, drill sections 44 may be spot welded to stop plate 53. As shown in FIG. 7, in another embodiment, drill sections 44 may be fixed to the inner side walls 47 of each adjacent drill section 44. Also, as shown in FIG. 5, in one embodiment drill sections 44 may be substantially hollow, whereby each adjacent smaller diameter drill section 44 may fit inside each adjacent larger diameter drill section 44. Certain applications may, however, require that at least a portion of one or more drill sections 44 have a solid inner portion 48.

Openings 32 and 36 may be made with drill bit 42. During use, shaft 52 may be inserted into a tool such as, for example, a hand held power driven drill. As shown in FIG. 3, first component 30 may be aligned with second component 34. Then, the drill rapidly rotates drill bit 42 and the user aligns the drill bit 42 with first component 30. The first contact with component 30 may be by teeth 50 of drill bit 42. The teeth 50 rotate and cut into first component 30. The user continues applying force to the drill which in turn further pushes rotating drill bit 42 into first component 30. This process continues until teeth 50 cut through and exit first component 30 and enter second component 34. The drill bit 42 then continues through second component 34 until teeth 50 exit component 34. The drill bit is then withdrawn from first and second components 30, 34 and openings 32, 36 have been formed.

As shown in FIG. 3, during use, force may be exerted on dowel base 20 causing the dowel 10 to be pressed into an opening 32 of first component 30. The opening 30 may be a circular shaped bore with sections 33 that decrease in bore diameter size along the length of opening 30. The opening's sections 33 may be sized so that the bore's inner diameter is slightly smaller than the outer diameter of the dowel section 14 that will be, when the dowel is completely in the opening 32, adjacent the corresponding opening's section 33. The second component 34 to be connected adjacent first component 30 may be provided with an opening 36 for dowel 10. Once dowel 10 is inserted into first opening 32 and tip 18 is extending out slightly past opening 32, the second component opening 36 may be aligned with first component opening 32. Dowel tip 18 in combination with bore section area 38 may provide for easy alignment of component openings 32,36. As a result of the minimal surface area of area 38, tip 18 can easily locate and be aligned with opening 36. Dowel tip 18 is then inserted into opening 36 in second component 34. Pressure may then be applied to the two components 30, 34 to hold them together as dowel 10 is driven into the second component opening 36. As the dowel 10 is inserted into the second component opening 36, the dowel 10 provides for proper alignment of first component 30 and second component 34. As shown in FIG. 3, when dowel 10 is fully in position in openings 32, 36, tip 18 and base 20 of dowel 10 may be substantially flush with the outer surfaces of the components 30, 34 and the first component 30 and the second component 32 will be properly allowed. Since dowel's 10 diameter is greater in size then the diameters of the corresponding openings sections 33, 36, dowel 10 is held tightly in openings 32, 36 by the frictional forces exerted on the dowel's outer side walls 16 by corresponding opening's 32, 36 inner side walls. Further, when dowel 10 is inserted into the openings 32, 36, steps 17 provide for first component 30 to be held tightly in place adjacent second component 34. In one embodiment each step 17 acts similar to the head of a nail whereby each step 17 prevents the components 30,34 from sliding off dowel 10 and separating from each other. Steps 17 also provide the added benefit that less adhesive, such as wood glue for example, is required for dowel 10. Normally, with prior art dowels, adhesive is applied along the entire length of the dowel before the dowel is inserted into the component openings. However, with the present dowel 10, if a user chooses to apply an adhesive to the dowel 10, adhesive is only needed on the portion of the dowel 10 that is inserted into the second component 34. Once an adhesive has been applied to the portion of dowel 10 positioned in the second component 34 and dowel 10 is fully in place in both components 30,34, the steps 17 of dowel 10 prevent the first component 30 from sliding off dowel 10 and separating from second component 34. The adhesive prevents the second component 34 from sliding off dowel 10 and separating from the first component 30.

The openings 32, 36 may be formed by a drill bit 42 as shown in FIG. 5 or by any other type of device that will provide for proper operation of the dowel 10. In alternate embodiments, the openings 32, 26 may be comprised of two, three, four or more sections 33, 37 of decreasing diameter depending on the characteristics and number of sections 14 that dowel 10 comprises. In still yet other embodiments, depending on the shape of dowel 10, the openings 32, 36 may have a cross section along the openings 32, 36 longitudinal axis that is substantially square shaped, triangular shaped or any other shape that will accept dowel 10.

## Claims

1. An assembly having a dowel (10) and at least two components (30,34) connected by the dowel (10), the dowel (10 having a base (20) and a tip (18) and at least three dowel sections (14), **characterized in that** each dowel section (14) is positioned directly adjacent each adjoining dowel section (14), having sidewalls (16), each dowel section (14) having a diameter wherein the diameters successively decrease over the length of the dowel from the base (20) to the tip (18); and
a step (17) located where each dowel section (14) is positioned directly adjacent another dowel section (14); and
in the mounted state each of said dowel sections (14) is inside the connected components (30,34).

2. The assembly of claim 1 wherein the transverse cross-section of each dowel section (14) is substantially circular in shape.

3. The assembly of claim 1 wherein the transverse cross-section of each dowel section (14) is substantially square in shape.

4. The assembly of claim 1 wherein the transverse cross-section of each dowel section (14) is substantially triangular in shape.

5. The assembly of claim 1 wherein each step (17) is substantially a 90° angle taken with respect to the dowel's axis.

6. The assembly of claim 1 wherein each step (17) is substantially convex in shape.

7. The assembly of claim 1 wherein each step (17) is substantially concave in shape.

8. The assembly of claim 1 wherein the dowel (10) is constructed of at least two different materials.

9. The assembly of claim 1 wherein the dowel (10) is constructed of wood and the dowel (10) has a metal insert (22) that is positioned substantially axially and extends through the dowel (10) from the base (20) to the tip (18).

10. The assembly of claim 1 wherein an adhesive attaches each dowel section (14) to an adjacent dowel section (14).

11. The assembly of claim 1 wherein the dowel (10) is constructed from a single piece of material.

12. The assembly of claim 1 wherein the dowel section (14) having the smallest diameter is at least as long as the length of any of the other dowel sections (14).

13. The assembly of claim 1 wherein each of the dowel sections (14) have the same length.

14. A method for connection of a plurality of components together **characterized by** the steps of:
providing a dowel (10) having three dowel sections (14) and having successively decreasing diameters along the length of the dowel (10);
providing a plurality of components (30,34) having openings (32,36) that will accept the dowel (10);
aligning the openings (32,36); and
inserting the dowel (10) into the aligned openings (32,36) so that the dowel (10) is inside said components (30,34).

15. The method of claim 14 further comprising the step of the dowel (10) aligning the plurality of components when the dowel (10) is inserted into the openings (32,36).

## Patentansprüche

1. Anordnung mit einem Dübel (10) und mit wenigstens zwei Bauteilen (30,34), welche mittels des Dübels (10) verbunden sind, wobei der Dübel (10) einen Boden (20) und eine Spitze (18) und wenigstens drei Dübelabschnitte (14) aufweist,
**dadurch gekennzeichnet, dass** jeder Dübelabschnitt (14) direkt benachbart zu jedem damit verbundenen Dübelabschnitt (14) angeordnet ist und Seitenwände (16) aufweist, wobei jeder Dübelabschnitt (14) einen Durchmesser aufweist, wobei sich die Durchmesser über die Länge des Dübels von dem Boden (20) zu der Spitze (18) verringern; und
einen Absatz (17) aufweist, der dort vorgesehen ist, wo jeder Dübelabschnitt (14) direkt benachbart zu einem weiteren Dübelabschnitt (14) angeordnet ist; und dass in dem montierten Zustand jeder der Dübelabschnitt (14) innerhalb der miteinander verbundenen Bauteile (30,34) ist.

2. Anordnung nach Anspruch 1, wobei der Querschnitt von jedem Dübelabschnitt (14) im Wesentlichen kreisförmig ist.

3. Anordnung nach Anspruch 1, wobei der Querschnitt von jedem Dübelabschnitt (14) im Wesentlichen quadratisch ist.

4. Anordnung nach Anspruch 1, wobei der Querschnitt von jedem Dübelabschnitt (14) im Wesentlichen dreieckig ist.

5. Anordnung nach Anspruch 1, wobei jeder Absatz (17) bezüglich der Dübelachse einen Winkel von im Wesentlichen 90° aufweist.

6. Anordnung nach Anspruch 1, wobei jeder Absatz (17) eine im Wesentlichen konvexe Form aufweist.

7. Anordnung nach Anspruch 1, wobei jeder Absatz (17) eine im Wesentlichen konkave Form aufweist.

8. Anordnung nach Anspruch 1, wobei der Dübel (10) aus wenigstens zwei Materialien ausgebildet ist.

9. Anordnung nach Anspruch 1, wobei der Dübel (10) aus Holz ausgebildet ist und der Dübel (10) einen Metalleinsatz (22) aufweist, welcher im Wesentlichen axial angeordnet ist und sich von dem Boden (20) zu der Spitze (18) erstreckt.

10. Anordnung nach Anspruch 1, wobei ein Klebstoff jeden Dübelabschnitt (14) an einem benachbarten Dübelabschnitt (14) befestigt.

11. Anordnung nach Anspruch 1, wobei der Dübel (10) aus einem einzelnen Materialstück ausgebildet ist.

12. Anordnung nach Anspruch 1, wobei der Dübelabschnitt (14), der den geringsten Durchmesser aufweist, wenigstens so lang wie die Länge von jedem anderen der Dübelabschnitte (14) ausgebildet ist.

13. Anordnung nach Anspruch 1, wobei jeder der Dübelabschnitte (14) dieselbe Länge aufweist.

14. Verfahren zum Verbinden einer Vielzahl von Bauteilen miteinander,
**gekennzeichnet durch**
die folgenden Schritte:
zur Verfügung stellen eines Dübels (10), welcher drei Dübelabschnitte (14) aufweist, welche sich nacheinander verringernde Durchmesser entlang der Länge des Dübels (10) aufweisen;
zur Verfügung stellen mehrerer Bauteile (30,34), welche Öffnungen (32,36) aufweisen, welche den Dübel (10) aufnehmen;
Ausrichten der Öffnungen (32,36); und
Einführen des Dübels in die ausgerichteten Öffnungen (32,36), so dass sich der Dübel (10) innerhalb der Bauteile (30,34) befindet.

15. Verfahren nach Anspruch 14, welches des weiteren den Schritt des Ausrichtens der mehreren Bauteile mittels des Dübels (10) aufweist, wenn der Dübel (10) in die Öffnungen (32,36) eingeführt wird.

## Revendications

1. Ensemble comprenant une cheville (10) et au moins deux composants (30, 34) assemblés par la cheville (10), la cheville (10) ayant une base (20), une pointe (18) et au moins trois sections de cheville (14),
**caractérisé en ce que** chaque section de cheville (14) est positionnée directement adjacente à chaque section de cheville (14) voisine comportant des parois latérales (16), chaque section de cheville (14) ayant un diamètre, les diamètres décroissant successivement sur la longueur de la cheville à partir de la base (20) vers la pointe (18); et
un épaulement (17) est prévu à l'endroit où chaque section de cheville (14) est positionnée directement adjacente à une autre section de cheville (14); et
à l'état monté, chacune desdites sections de cheville (14) se trouve à l'intérieur des composants assemblés (30, 34).

2. Ensemble de la revendication 1, dans lequel la section transversale de chaque section de cheville (14) est de forme sensiblement circulaire.

3. Ensemble de la revendication 1, dans lequel la section transversale de chaque section de cheville (14) est de forme sensiblement carrée.

4. Ensemble de la revendication 1, dans lequel la section transversale de chaque section de cheville (14) est de forme sensiblement triangulaire.

5. Ensemble de la revendication 1, dans lequel chaque épaulement (17) fait sensiblement un angle de 90° par rapport à l'axe de la cheville.

6. Ensemble de la revendication 1, dans lequel chaque épaulement (17) est de forme sensiblement convexe.

7. Ensemble de la revendication 1, dans lequel chaque épaulement (17) est de forme sensiblement concave.

8. Ensemble de la revendication 1, dans lequel la cheville (10) est construite en au moins deux matières différentes.

9. Ensemble de la revendication 1, dans lequel la cheville (10) est construite en bois et ladite cheville (10) comporte une insertion métallique (22) qui est positionnée sensiblement axialement et s'étend à travers la cheville (10) à partir de la base (20) vers la pointe (18).

10. Ensemble de la revendication 1, dans lequel un adhésif attache chaque section de cheville (14) à une section de cheville (14) adjacente.

11. Ensemble de la revendication 1, dans lequel la cheville (10) est construite en une seule pièce de matière.

12. Ensemble de la revendication 1, dans lequel la section de cheville (14) qui a le plus petit diamètre est au moins aussi longue que la longueur de n'importe quelle autre section de cheville (14).

13. Ensemble de la revendication 1, dans chacune des sections de cheville (14) a la même longueur.

14. Procédé d'assemblage d'une pluralité de composants, **caractérisé par** les étapes de:
fourniture d'une cheville (10) ayant trois sections de cheville (14) et ayant des diamètres successivement décroissants sur la longueur de la cheville (10);
fourniture d'une pluralité de composants (30, 34) ayant des ouvertures (32, 36) qui accepteront la cheville (10);
alignement des ouvertures (32, 36); et
introduction de la cheville (10) dans les ouvertures alignées (32, 36) de manière que la cheville (10) se trouve à l'intérieur desdits composants (30, 34).

15. Procédé de la revendication 14, comprenant en outre l'étape d'alignement de la pluralité de composants par la cheville (10) lorsque ladite cheville (10) est introduite dans les ouvertures (32, 36).
